# EUROPEAN PATENT SPECIFICATION

(11) **EP 2 090 966 B1**
(45) Date of publication and mention of the grant of the patent: **19.12.2012**
(21) Application number: 08155297.8
(22) Date of filing: 28.04.2008
(51) Int. Cl.: G06F 3/041, G06F 3/044, G02F 1/1333

(54) **Capacitive touch panel**
Kapazitiver Berührungsbildschirm
Panneau tactile capacitif

(30) Priority: 18.02.2008 TW 97202841 U
(43) Date of publication of application: 19.08.2009
(73) Proprietor: TPK Touch Solutions Inc., Taipei (TW)
(72) Inventor: Liu, Chen-Yu, Taipei (TW); Ho, Kwan-Sin, Taipei (TW)
(74) Representative: Holzwarth-Rochford, Andreas

(56) References cited:
- EP-A- 1 387 246
- EP-A- 1 746 485
- WO-A2-2004/114265
- WO-A2-2005/114369
- US-A- 5 457 289
- US-A1- 2003 234 770
- US-A1- 2004 238 835
- US-A1- 2005 126 831
- US-A1- 2006 114 374
- US-A1- 2006 146 033
- US-A1- 2007 030 255
- US-A1- 2007 200 832

## Description

### BACKGROUND

### 1. Field of the Invention

The invention relates to a touch panel, especially to a capacitive touch panel assembled with a display panel.

### 2. Description of the Related Art

Most of electronic devices, such as PDA, palm-Sized PC and information appliance, have a touch display panel individually. The touch display panel includes a lens, a display panel and a touch panel arranged between the lens and the display panel. A user can use a finger or a touch pen to touch the objects displayed on the display panel for inputting information or performing an operation.

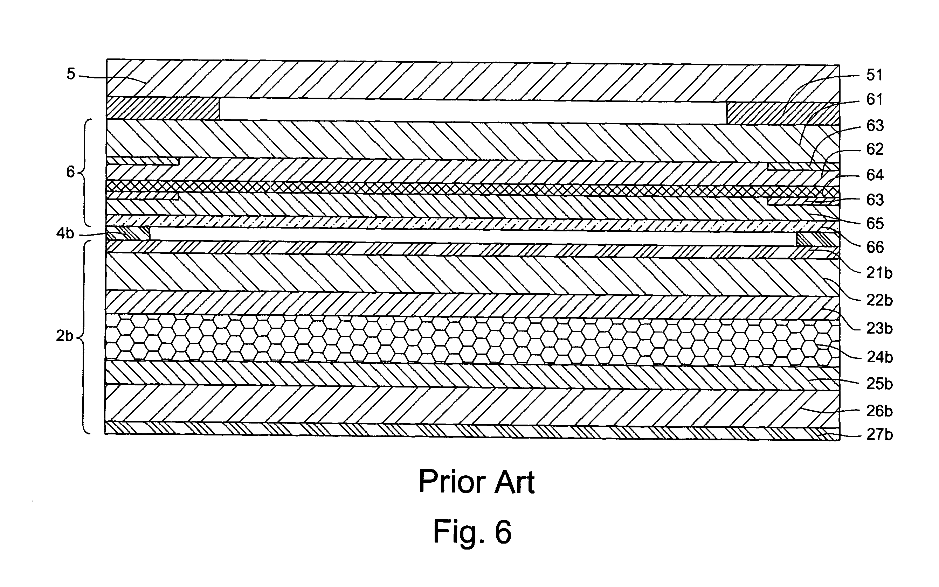

According to Fig. 6 showing a not prepublished capacitive touch panel of the applicant a black matrix 51 is provided on the periphery of a lower surface of the lens 5. The black matrix 51 is stick to the periphery of the upper surface of a glass substrate 61 of the touch panel 6. Conductive layers are formed on the lower surface of the glass substrate 61. The Conductive layers include at least an upper transparent conductive layer 62 (such as an ITO conductive layer) and a lower transparent conductive layer 65. A transparent insulation layer 64 is formed between the upper transparent conductive layer 62 and the lower transparent conductive layer 65. On each periphery of the upper transparent conductive layer 62 and the periphery of the lower transparent conductive layer 65, a metal trace 63 is formed respectively for transmitting signals. The black matrix 51 is arranged to cover the metal trace 63 so that the metal trace 63 can't be exposed from the lens 5 for prettifying the appearance of the lens 5. A transparent over coat 66 made of insulation material (such as silicon nitride, silicon dioxide and so on) is formed under the lower transparent conductive layer 65 to prevent the lower transparent conductive layer 65 from being scraped and damaged. The touch position of the touch panel 6 is detected according to an induced current corresponding to a capacitive generated between the transparent conductive layers 62, 65 and the human body.

The display panel 2b may be a liquid crystal display (LCD) formed by providing a liquid crystal layer 24b between an upper glass substrate 22b and a lower glass substrate 26b. An upper polarizing plate 21 b is provided on a top surface of the upper glass substrate 22b, and a transparent conductive layer 23b is provided between the liquid crystal layer 24b and a bottom surface of the upper glass substrate 22b. A lower polarizing plate 27b is provided on a bottom surface of the lower glass substrate 26b. Another transparent conductive layer 25b is provided between the liquid crystal layer 24b and a bottom surface of the lower glass substrate 26b. The upper glass substrate 22b and the transparent conductive layer 23b form an upper glass electrode substrate. The lower glass substrate 26b and the transparent conductive layer 25b form a lower glass electrode substrate.

The display theory of the LCD is the liquid crystal layer 24b sandwiched in between the upper glass electrode substrate and the lower glass electrode substrate. Driven by an electric field between the upper glass electrode substrate and the lower glass electrode substrate, the liquid crystal molecules are twisted to control whether the light from a light source can pass through. Further, the liquid crystal display displays a colorful image using a color filer of the upper glass substrate 22b. Thus, a user can touch an indicative position of the image through the lens 5 and the touch panel 6 to perform an operation or input information.

However, because the lens 5 and the substrate 61 of the touch panel 6 are made of a same glass material, much more glass materials are consumed for producing the touch display panel. Conventionally, the lens 5 and touch panel 6 are produced individually and then assembled together in sequence. Therefore, the assembling process is very complex and wastes time, and further it is easy to generate defective products. Furthermore, it is difficult to design a thin electronic device with the touch display panel because the thickness of the touch display panel increases for its overlapping structure.
Furthermore WO2005/114369 A2 discloses a multipoint touch screen. Especially it is related to a touch panel having a transparent capacitive sensing medium configured to detect multiple touches or near touches that occur at the same time and at distinct locations in the plane of the touch panel and to produce distinct signals representative of the location of the touches on the plane of the touch panel for each of the multiple touches.

What is need is a capacitive touch panel which can improve the above disadvantages.

### BRIEF SUMMARY

One object of the invention is to provide a capacitive touch panel which has a low cost, a high yield rate and a simple assembling process.

Another object of the invention is to provide a capacitive touch panel which can be form of slim type design.

For at least one of the above objects, the invention provides inter alia a capacitive touch panel according to claim 1.

The capacitive touch panel is assembled on a display panel so that a glass substrate of the touch panel conventionally arranged between the lens and the display panel can be omitted.

### BRIEF DESCRIPTION OF THE DRAWINGS

These and other features and advantages of the various embodiments disclosed herein will be better understood with respect to the following description and drawings, in which like numbers refer to like parts throughout, and in which:

Fig. 1 is a perspective view showing a capacitive touch panel of the invention assembled in a shell of an electronic device;

Fig. 2 is a sectional view of the capacitive touch panel of Fig. 1 according to one embodiment of the invention;

Fig. 3 is a sectional view of the capacitive touch panel according to a transformation of Fig. 2;

Fig. 4 is a sectional view of the capacitive touch panel of the Fig. 1 according to another embodiment of the invention;

Fig. 5 is a sectional view of the capacitive touch panel according to a transformation of Fig. 4; and

Fig. 6 is a sectional view of a touch display panel of the applicant according to a prior not prepublished embodiment.

### DETAILED DESCRIPTION

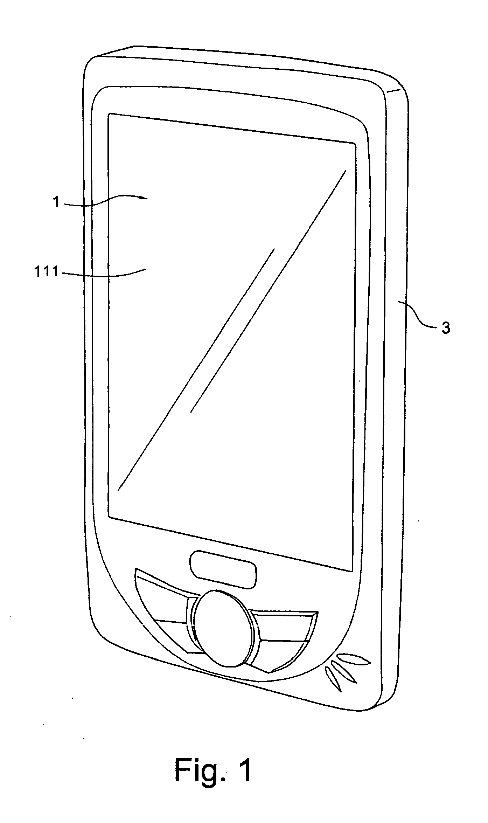

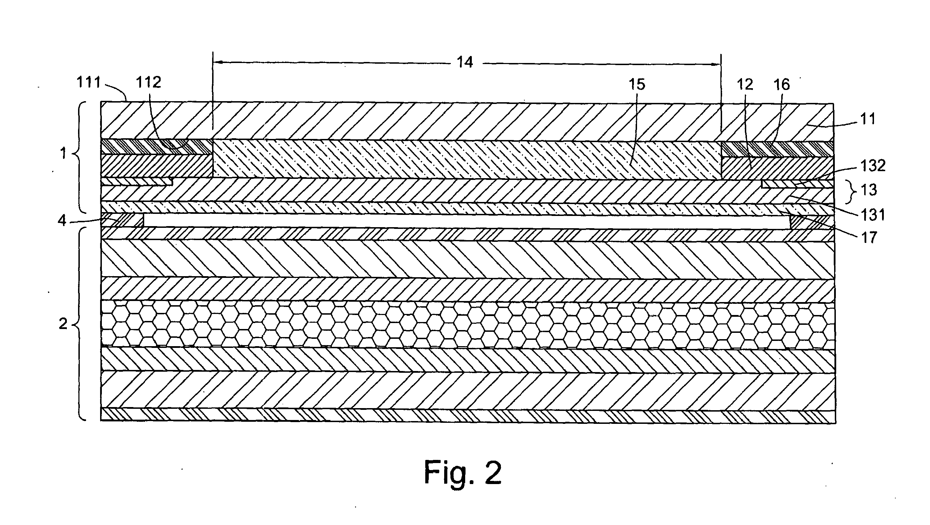

Fig. 1 is a perspective view showing a capacitive touch panel 1 of the invention assembled in a shell 3 of an electronic device. Fig. 2 is a sectional view showing the capacitive touch panel 1 assembled on an upper surface of a display plane 2 according to one embodiment of the invention. The capacitive touch panel 1 includes a lens 11, a mask layer 12 and a sensing circuit layer 13.

The lens 11 may be made of glass, rubber or ebonite, and the lens 11 includes an upper surface 111 for touching and a lower surface 112 for bonding.

The mask layer 12 is provided on the periphery of the lower surface 112, and the mask layer 12 may be a block matrix or other opaque coating layer.

The sensing circuit layer 13 is provided under the lens 11, and the mask layer 12 covers the periphery of the sensing circuit layer 13 so that a sensing region 14 is exposed.

A smooth layer 15 made of transparent organic or inorganic material is provided to be sandwiched in between the lens 11 and the sensing circuit layer 13. The touch range of the sensing region 14 includes the area of the lens 11 that is formed on the smooth layer but not formed on the mask layer 12. The sensing circuit layer 13 is provided on a lower surface of the mask layer 12 and a lower surface of the smooth layer 15. The smooth layer 15 can smooth the lower surface of the mask layer 12 so that the yield rate can be enhanced. As a transformation of the embodiment, a shielding layer 16 is provided between the 11 and the mask layer 12 to prevent noise signals. The width of the shielding layer 16 may be the same as that of the mask layer 12.

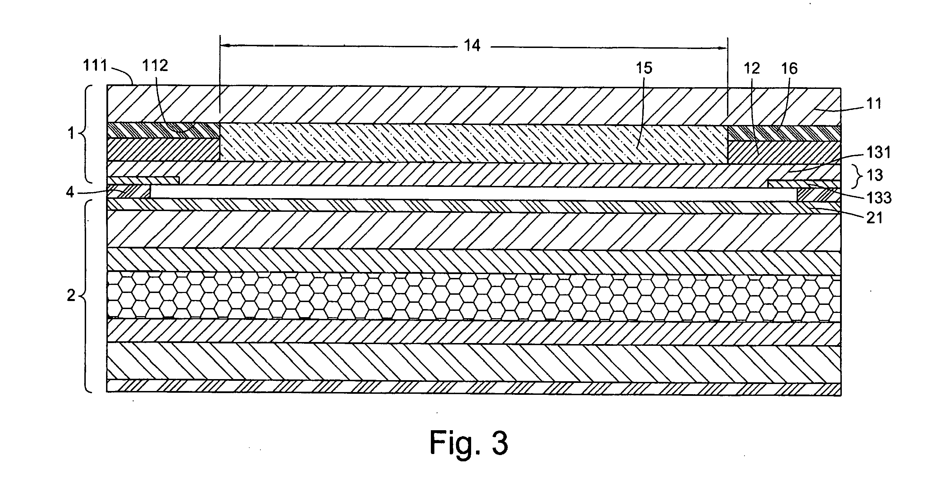

The sensing circuit layer 13 may be formed by coating, exposing, developing and etching. In the embodiment, the sensing circuit layer 13 includes a single conductive film 131. According to the invention besides the single conductive film 131, the sensing circuit layer 13 also includes a metal trace arranged on the periphery of the single conductive film 131. The metal trace (metal trace 132 as shown in Fig. 2) can be arranged on the periphery of the upper surface of the single conductive film 131. The metal trace (metal trace 133 as shown in Fig. 3) also can be arranged on the periphery of the lower surface of the single conductive film 131. The mask layer 12 covers the metal trace 132, 133 to prevent the metal trace 132, 133 from being exposed on the lens 11. Thus, the appearance of the lens 11 is prettified.

The single conductive film 131 is made of transparent conductive material (such as ITO). An over coat 17 (as shown in Fig. 2) is coated on the lower surface of the sensing circuit layer 13. An adhesive layer 4 is provided between the periphery of the over coat 17 and the periphery of the display panel 2. As shown in Fig. 3, the over coat 17 can be omitted, and the adhesive layer 4 is directly bonded to an upper polarizing plate 21 of the display panel 2.

According to the above embodiment, the display panel 2 can display images and letters through the lens 11, the single conductive film 131 and the smooth layer 15. When a finger touches on an upper surface 111 of the lens 11, the single conductive film 131 in the sensing region will output a capacitive sensing signal corresponding to the touched position because of a capacitive effect produced by a user finger touch sensing of the upper surface 111. The capacitive sensing signal is transmitted to a processor for detecting the touched position (not shown) through the metal trace 132 (shown in Fig. 2), the metal trace 133 (shown in Fig. 3).

According to the above description, the sensing circuit layer 13 is provided on the inner side of the lens 11 to form a capacitive touch circuit of a touch panel, so the capacitive touch panel 1 has a touch sensing ability. Thus, a glass substrate conventionally arranged between a lens and a display panel can be omitted, and the capacitive touch panel 1 of the invention can be directly arranged on the upper surface of the display panel 2. Therefore, the glass substrate used in conventional touch panel can be omitted, and the conventional panel bonding process can be simplified. The cost and time for producing the touch panel can be reduced and the touch panel can be also form of slim type design.

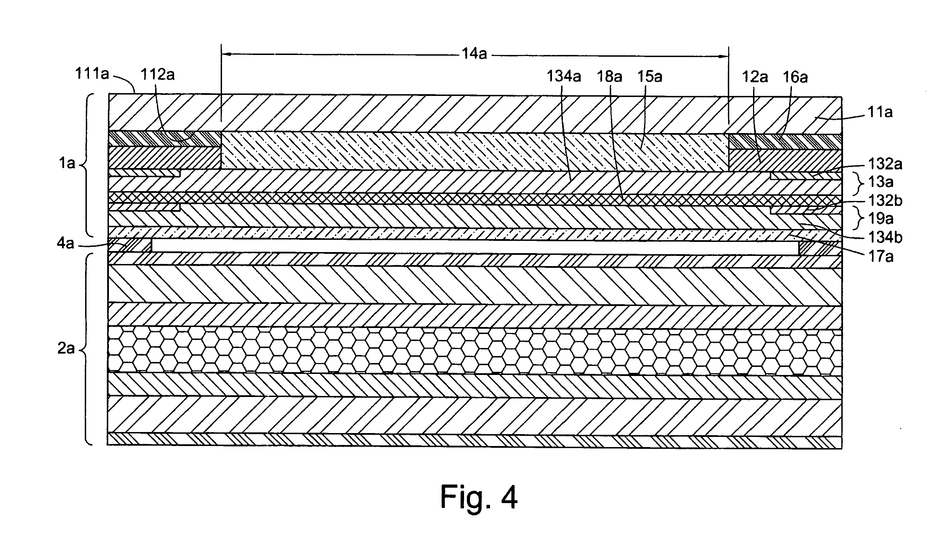

Fig. 4 is a sectional view showing the capacitive touch panel 1a assembled on an upper surface of a display device 2a according to another embodiment of the invention. The capacitive touch panel 1a includes a lens 11a, a mask layer 12a, a first sensing circuit layer 13a, a transparent insulation layer 18a and a second sensing circuit layer 19a.

The lens 11 a is made of glass, rubber or ebonite, and includes an upper surface 111 a for touching and a lower surface 112a for bonding.

The mask layer 12a is provided on the periphery of the lower surface 112a, and the mask layer 12a may be a black matrix or other opaque coating layer.

The first sensing circuit layer 13a is provided under the lens 11a, and the mask layer 12 covers the periphery of the first sensing circuit layer 13a so that a sensing region 14a is exposed.

The transparent insulation layer 18a is provided to at least cover the lower surface of the first sensing circuit layer 13a of the sensing region 14a.

The second sensing circuit layer 19a is provided on the lower surface of the transparent insulation layer 18a.

Different structure of the first sensing circuit layer 13a and the second sensing circuit layer 19a would effect the distribution area of transparent insulation layer 18a. When the two sensing layers are in the form of parallel structure, the insulation layer 18a would be fully distributed between the two sensing layers; but when the two sensing layers are in the form of non-parallel structure and existing an intersection area between them. In these cases, the insulation layer 18a is used to electrically insulate the first sensing circuit layer 13a and the second sensing circuit layer 19a. But in the later structure, the insulation layer 18a would be fully distributed between the two sensing layers or just only be distributed on that intersection area.

The touch range of the sensing region 14a includes areas that are not covered by the mask layer 12a. A smooth layer 15a (as shown in Fig. 4) made of transparent organic or inorganic material is provided in the sensing region 14a to fill up the space between the lens 11a and the first sensing circuit layer 13a. The first sensing circuit layer 13a is provided on the lower surface of the mask layer 12a and the lower surface of the smooth layer 15a. A shielding layer 16a is provided between the lens 11 a and the mask layer 12a to prevent noise signals. The width of the shielding layer 16a can be the same as that of the mask layer 12a.

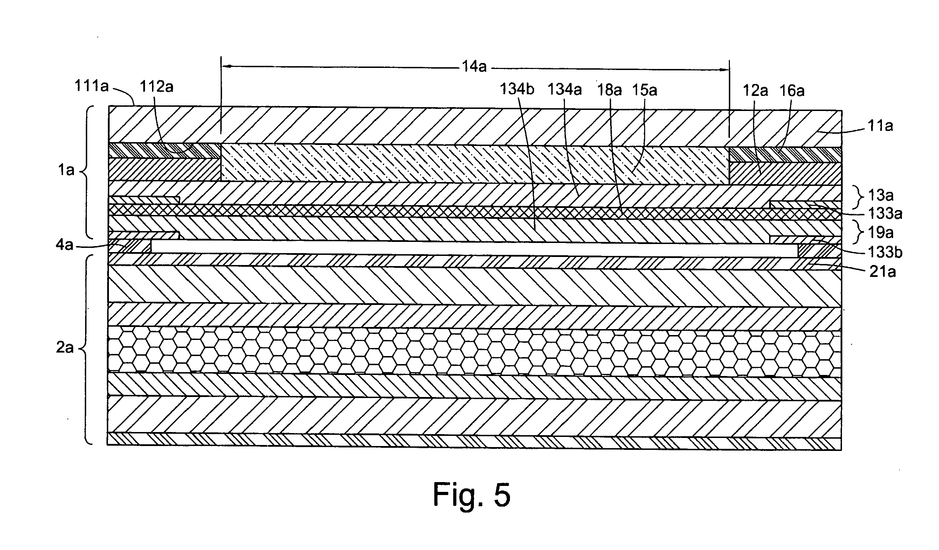

In this embodiment, the first sensing circuit layer 13a includes a first (upper) conductive film 134a. According to the invention besides the upper conductive film 134a, the first sensing circuit layer 13a also includes a metal trace arranged on the periphery of the upper conductive film 134a. The metal trace (metal trace 132a as shown in Fig. 4) can be arranged on the periphery of the upper surface of the upper conductive film 134a. The metal trace (metal trace 133a as shown in Fig. 5) also can be arranged on the periphery of the lower surface of the upper conductive film 134a. The mask layer 12a covers the metal trace 132a, 133a to prevent the metal trace 132a, 133a from being exposed on the lens 11a. Thus, the appearance of the lens 11a is prettified.

The second sensing circuit layer 19a includes a second (lower) conductive film 134b. Besides the lower conductive film 134b, the second sensing circuit layer 19a also includes a metal trace arranged on the periphery of the lower conductive film 134b. The metal trace (metal trace 132b as shown in Fig. 4) can be arranged on the periphery of the upper surface of the lower conductive film 134b. The metal trace (metal trace 133b as shown in Fig. 5) also can be arranged on the periphery of the lower surface of the lower conductive film 134b. The mask layer 12a covers the metal trace 132b, 133b to prevent the metal trace 132b, 133b from being exposed on the lens 11a. Thus, the appearance of the lens 11a is prettified.

Furthermore, an over coat 17a (as shown in Fig. 4) is coated on the lower surface of the second sensing circuit layer 19a. An adhesive layer 4a is provided between the periphery of the over coat 17a and the periphery of the display panel 2a. As shown in Fig. 5, the over coat 17a can be omitted, and the adhesive layer 4a is directly bonded to an upper polarizing plate 21a of the display panel 2a.

According to the above embodiment, when a finger touches on an upper surface 111 a of the lens 11 a, the upper conductive film 134a and the lower conductive film 134b in the sensing region 14a will respectively output a capacitive sensing signal corresponding to the touched position because of a capacitive effect produced by a user finger touch sensing of the upper surface 111a. And the capacitive sensing signals are transmitted to a processor (not shown) through the corresponding metal traces for detecting the touched position. Furthermore, the capacitive sensing signal also can be transmitted to the processor through corresponding conductive films for detecting the touched position. Thus, the assembling process is simplified, the yield rate is enhanced, and the touch panel can be produced with slim type design.

The above description is given by way of example, and not limitation. Thus, the scope of the claims is not to be limited by the illustrated embodiments.

## Claims

1. A capacitive touch panel (1, 1a), comprising:
a lens (11, 11a) comprising an upper surface (111, 111a) for touching and a lower surface (112, 112a) for bonding;
a sensing circuit layer (13, 13a) formed under the lens (11, 11a); and
a mask layer (12, 12a) formed on a periphery of a lower surface (112, 112a) of the lens (11, 11 a);
the mask layer (12, 12a) covers a periphery of the sensing circuit layer (13, 13a) to expose a sensing region (14, 14a);
the sensing circuit layer (13, 13a) comprises a transparent conductive film (131, 134a) and a metal trace (133, 132a) arranged on the periphery of the transparent conductive film (131, 134a);
the mask layer (12, 12a) covers the metal trace (132, 132a) and/or is arranged on a metal trace (132, 132a);
the sensing circuit layer (13, 13a) is capable of outputting a sensing signal for a capacitive effect produced by a touch sensing of the upper surface (111, 111 a) of the lens (11, 11a) transmitted to a processor for detecting the touched position through the metal trace (132, 132a), and
the capacitive touch panel (1, 1 a) is capable of being arranged on the upper surface of a display panel (2, 2a), wherein the capacitive touch panel further comprises a smooth layer (15, 15a) sandwiched between the lens (11, 11a) and the sensing circuit layer (13, 13a) to fill up the space between the lens (11, 11a) and the sensing circuit layer (13, 13a), wherein a touch range of the sensing region (14, 14a) comprises an area of the lens (11, 11 a) that is contacted with the smooth layer (15, 15a), and/or the sensing circuit layer (13, 13a) is arranged on a lower surface of the mask layer (12, 12a) and a lower surface of the smooth layer (15, 15a).

2. The capacitive touch panel of claim 1, wherein the smooth layer (15, 15a) is made of transparent organic or inorganic material.

3. The capacitive touch panel of claim 1, wherein the lens (11, 11 a) is made of glass, rubber or ebonite.

4. The capacitive touch panel of claim 1, wherein the mask layer (12, 12a) is made of opaque coating material.

5. The capacitive touch panel of claim 1, further comprising a shielding layer (16, 16a) provided between the lens (11, 11 a) and the mask layer (12, 12a) for preventing noise signals.

6. The capacitive touch panel of claim 1, wherein the metal trace (133, 132a) is formed on a periphery of an upper surface or a lower surface of the conductive film (131, 134a).

7. The capacitive touch panel of claim 1, further comprising
an overcoat (17, 17a) provided on a lower surface of the sensing circuit layer (13, 19a), and
an adhesive layer (4, 4a) provided under the overcoat (17, 17a) for bonding with the display panel (2, 2a).

8. The capacitive touch panel of claim 1, further comprising an adhesive layer (4, 4a) provided on a lower surface of the sensing circuit layer (13, 19a) for bonding with a polarizing plate of the display panel (2, 2a).

9. The capacitive touch panel of claim 1, wherein the sensing circuit layer comprises a first sensing circuit layer (13a) capable of outputting a first sensing signal for a capacitive effect produced by a touch sensing of the upper surface (111 a) of the lens (11 a);
a second sensing circuit layer (19a) capable of outputting a second sensing signal for the capacitive effect produced by the touch sensing; and
an insulation layer (18a) at least covering a lower surface of the first sensing circuit (13a), wherein the smooth layer (15a) is sandwiched between the lens (11 a) and the first sensing circuit layer (13a) to fill up the space between the lens (11 a) and the first sensing circuit layer (13a), wherein a touch range of the sensing region (14a) comprises an area of the lens (11 a) that is contacted with the smooth layer (15a), and the first sensing circuit layer (13a) is arranged on a lower surface of the mask layer (12a) and a lower surface of the smooth layer (15a).

10. The capacitive touch panel of claim 9, wherein the insulation layer (18a) is made of transparent insulation material.

11. The capacitive touch panel of claim 9, wherein the first sensing circuit layer (13a) is formed under the lens (11a), wherein the mask layer (12a) covers a periphery of the first sensing circuit layer (13a) to expose the sensing region (14a), the second sensing circuit layer (19a) is formed on a lower surface of the insulation layer (18a), the second sensing signal is produced by touch sensing of the sensing region (14a) and/or the second sensing circuit layer (19a) is provided on a lower surface of the insulation layer (18a).

12. The capacitive touch panel of claim 9 or 11, further comprising a shielding layer (16a) between the lens (11 a) and the mask layer (12a) for preventing noise signals or wherein the first sensing circuit layer (13a) comprises a first conductive film (134a), and the second sensing circuit layer (19) comprises a second conductive film (134b).

13. The capacitive touch panel of claim 9 or 11, wherein the transparent conductive film comprises a first conductive film (134a) and a second conductive film (134b), and the metal trace comprises a first metal trace (132a, 133a) and a second metal trace (132b, 133b), the first sensing circuit layer (13a) comprises the first conductive film (134b) and the first metal trace (132a, 133a), formed on a periphery of a upper surface or a lower surface of the first conductive film (134a), and/or the second sensing circuit layer (19a) comprises the second conductive film (134b) and the second metal trace (132b, 133b) formed on a periphery of a upper surface or a lower surface of the second conductive film (134b), wherein the mask layer (12a) covers the periphery of the first sensing circuit layer (13a), covers the metal trace (132a) and/or is arranged on the metal trace (132a).

14. The capacitive touch panel of claim 9 or 11, further comprising an overcoat (17a) provided on a lower surface of the second sensing circuit layer (19a), and an adhesive layer (4a) provided under the overcoat (17a) for bonding with a display panel (2a) or an adhesive layer (2a) provided on a lower surface of the second sensing circuit layer (19a) for bonding with a polarizing plate of the display panel (2a).

15. An assembly comprising a capacitive touch panel (1, 1a) according to one of the preceding claims and a display panel (2, 2a), wherein the capacitive touch panel (1, 1a) is assembled on an upper surface of the display panel (2, 2a).

## Patentansprüche

1. Kapazitives Berührungsbedienfeld (1, 1a), umfassend:
eine Linse (11, 11a), die eine obere Oberfläche (111, 111a) zum Berühren und eine untere Oberfläche (112, 112a) zum Verbinden aufweist;
eine unter der Linse (11, 11a) ausgebildete Sensierschaltungsschicht (13, 13a); und eine an einer Peripherie der unteren Oberfläche (112, 112a) der Linse (11, 11a) ausgebildete Maskierungsschicht (12, 12a);
die Maskierungsschicht (12, 12a) bedeckt eine Peripherie der Sensierschaltungsschicht (13, 13a) um eine Sensierregion (14, 14a) darzubieten;
die Sensierschaltungsschicht (13, 13a) weist eine transparente, leitfähige Schicht (131, 134a) und eine auf einer Peripherie der transparenten, leitfähigen Schicht (131, 134a) angeordnete Metallleiterbahn (133, 132a) auf;
die Maskierungsschicht (12, 12a) bedeckt die Metallleiterbahn (133, 132a) und/oder ist auf einer Metallleiterbahn (132, 132a) angeordnet;
die Sensierschaltungsschicht (13, 13a) ist zur Ausgabe eines Sensiersignals für einen durch eine Berührungssensierung der oberen Oberfläche (111, 111a) der Linse (11, 11a) erzeugten kapazitiven Effekt in der Lage, das über die Metallleiterbahn (132, 132a) zu einem Prozessor zur Erkennung der berührten Position übertragen wird, und das kapazitive Berührungsbedienfeld (1, 1a) ist geeignet, um auf der oberen Oberfläche eines Anzeigefelds (2, 2a) angeordnet zu werden, wobei das kapazitive Berührungsbedienfeld weiterhin eine zwischen der Linse (11, 11a) und der Sensierschaltungsschicht (13, 13a) angeordnete Ebnungsschicht (15, 15a) zum Auffüllen des Raumes zwischen der Linse (11, 11a) und der Sensierschaltungsschicht (13, 13a) aufweist, wobei ein Berührungsbereich der Sensierregion (14, 14a) einen Bereich der Linse (11, 11a) aufweist, der mit der Ebnungsschicht (15, 15a) kontaktiert ist, und/oder die Sensierschaltungsschicht (13, 13a) auf einer unteren Oberfläche der Maskierungsschicht (12, 12a) und einer unteren Oberfläche der Ebungsschicht (15, 15a) angeordnet ist.

2. Kapazitives Berührungsbedienfeld nach Anspruch 1, **dadurch gekennzeichnet, dass**
die Ebnungsschicht (15, 15a) aus transparentem organischem oder anorganischem Material gefertigt ist.

3. Kapazitives Berührungsbedienfeld nach Anspruch 1, **dadurch gekennzeichnet, dass**
die Linse (11, 11a) aus Glas, Gummi oder Ebonit gefertigt ist.

4. Kapazitives Berührungsbedienfeld nach Anspruch 1, **dadurch gekennzeichnet, dass**
die Maskierungsschicht (12, 12a) aus opakem Beschichtungsmaterial gefertigt ist.

5. Kapazitives Berührungsbedienfeld nach Anspruch 1, weiterhin aufweisend
eine zwischen der Linse (11, 11a) und der Maskierungsschicht (12, 12a) vorgesehene Abschirmschicht (16, 16a) zur Verhinderung von Störsignalen.

6. Kapazitives Berührungsbedienfeld nach Anspruch 1, **dadurch gekennzeichnet, dass**
die Metallleiterbahn (133, 132a) auf einer Peripherie einer oberen Oberfläche oder einer unteren Oberfläche der leitfähigen Schicht (131, 134a) ausgebildet ist.

7. Kapazitives Berührungsbedienfeld nach Anspruch 1, weiterhin aufweisend
eine auf einer unteren Oberfläche der Sensierschaltungsschicht (13, 19a) vorgesehene Bedeckung (17, 17a) und
eine unter der Bedeckung (17, 17a) zum Verbinden mit dem Anzeigefeld (2, 2a) vorgesehene Adhäsionsschicht (4, 4a).

8. Kapazitives Berührungsbedienfeld nach Anspruch 1, weiterhin aufweisend
eine auf einer unteren Oberfläche der Sensierschaltungsschicht (13, 19a) zum Verbinden mit einer polarisierenden Scheibe des Anzeigefelds (2, 2a) vorgesehene Adhäsionsschicht (4, 4a).

9. Kapazitives Berührungsbedienfeld nach Anspruch 1, wobei
die Sensierschaltungsschicht eine erste Sensierschaltungsschicht (13a) aufweist, die zur Ausgabe eines ersten Sensiersignals für einen durch Berührungssensierung der oberen Oberfläche (111a) der Linse (11a) erzeugten kapazitiven Effekt geeignet ist;
eine zweite Sensierschaltungsschicht (19a) aufweist, die zur Ausgabe eines zweiten Messsignals für einen durch die Berührungssensierung erzeugten kapazitiven Effekt geeignet ist; und
eine Isolierungsschicht (18a) aufweist, die zumindest eine untere Oberfläche der ersten Sensierschaltungsschicht (13a) bedeckt, wobei die Ebnungsschicht (15a) zum Auffüllen des Raumes zwischen der Linse (11a) und der ersten Sensierschaltungsschicht (13a) zwischen der Linse (11a) und der ersten Sensierschaltungsschicht (13a) angeordnet ist, wobei ferner ein Berührungsbereich der Sensierregion (14a) einen Bereich der Linse (11a) aufweist, der mit der Ebnungsschicht (15a) kontaktiert ist, und dass die erste Sensierschaltungsschicht (13a) auf einer unteren Oberfläche der Maskierungsschicht (12a) und einer unteren Oberfläche der Ebnungsschicht (15a) angeordnet ist.

10. Kapazitives Berührungsbedienfeld nach Anspruch 9, **dadurch gekennzeichnet, dass**
die Isolierungsschicht (18a) aus einem transparenten Isoliermaterial gefertigt ist.

11. Kapazitives Berührungsbedienfeld nach Anspruch 9, **dadurch gekennzeichnet, dass**
die erste Sensierschaltungsschicht (13a) unter der Linse (11a) ausgebildet ist, dass die Maskierungsschicht (12a) eine Peripherie der ersten Sensierschaltungsschicht (13a) bedeckt, um die Sensierregion (14a) darzubieten, die zweite Sensierschaltungsschicht (19a) auf einer unteren Oberfläche der Isolierungsschicht (18a) ausgebildet ist, das zweite Sensiersignal durch Berührungserkennung der Sensierregion (14a) erzeugt wird und/oder die zweite Sensierschaltungsschicht (19a) auf einer unteren Oberfläche der Isolierungsschicht (18a) vorgesehen ist.

12. Kapazitives Berührungsbedienfeld nach Anspruch 9 oder 11, weiterhin aufweisend
eine Abschirmschicht (16a) zwischen der Linse (11a) und der Maskierungsschicht (12a) zur Verhinderung von Störsignalen oder wobei die erste Sensierschaltungsschicht (13a) eine erste leitfähige Schicht (134a) und die zweite Sensierschaltungsschicht (19) eine zweite leitfähige Schicht (134b) aufweist.

13. Kapazitives Berührungsbedienfeld nach Anspruch 9 oder 11, **dadurch gekennzeichnet, dass**
die transparente leitfähige Schicht eine erste leitfähige Schicht (134a) und eine zweite leitfähige Schicht (134b) aufweist und die Metallleiterbahn eine erste Metallleiterbahn (132a, 133a) und eine zweite Metallleiterbahn (132b, 133b) aufweist, wobei die erste Sensierschaltungsschicht (13a) die erste leitfähige Schicht (134b) und die auf einer Peripherie oder einer oberen Oberfläche oder einer unteren Oberfläche der ersten leitfähigen Schicht (134a) ausgebildete erste Metallleiterbahn (132a, 133a) aufweist und/oder die zweite Sensierschaltungsschicht (19a) die zweite leitfähige Schicht (134b) und die auf einer Peripherie oder einer oberen Oberfläche oder einer unteren Oberfläche der zweiten leitfähigen Schicht (134b) ausgebildete zweite Metallleiterbahn (132b, 133b) aufweist, wobei die Maskierungsschicht (12a) die Peripherie der ersten Sensierschaltungsschicht bedeckt (13a), die Metallleiterbahn (132a) bedeckt und/oder auf der Metallleiterbahn (132a) angeordnet ist.

14. Kapazitives Berührungsbedienfeld nach Anspruch 9 oder 11, weiterhin aufweisend
eine auf einer unteren Oberfläche der zweiten Sensierschaltungsschicht (19a) vorgesehene Bedeckung (17a) und eine unter der Bedeckung (17a) zum Verbinden mit dem Anzeigefeld (2a) vorgesehene Adhäsionsschicht (4a) oder eine auf einer unteren Oberfläche der zweiten Sensierschaltungsschicht (19a) zum Verbinden mit einer polarisierenden Scheibe des Anzeigefelds (2a) vorgesehene Adhäsionsschicht (2a).

15. Anordnung, die ein kapazitives Berührungsbedienfeld (1, 1a) nach einem der vorhergehenden Ansprüche und ein Anzeigefeld (2, 2a) aufweist, **dadurch gekennzeichnet, dass** das kapazitive Berührungsbedienfeld (1, 1a) auf einer oberen Oberfläche des Anzeigefelds (2, 2a) montiert ist.

## Revendications

1. Panneau tactile capacitif (1, 1a), comprenant :
une lentille (11, 11a) comprenant une surface supérieure (111, 111 a) à toucher et une surface inférieure (112, 112a) de liaison ;
une couche de circuit de détection (13, 13a) formée en dessous de la lentille (11, 11a) ; et
une couche de masque (12, 12a) formée sur une périphérie de la surface inférieure (112, 112a) de la lentille (11, 11a);
la couche de masque (12, 12a) recouvre une périphérie de la couche de circuit de détection (13, 13a) pour exposer une zone de détection (14, 14a) ;
la couche de circuit de détection (13, 13a) comprend un film conducteur transparent (131, 134a) et un tracé métallique (133, 132a) agencé sur la périphérie du film conducteur transparent (131, 134a) ;
la couche de masque (12, 12a) recouvre le tracé métallique (132, 132a) et/ou est agencée sur un tracé métallique (132, 132a) ;
la couche de circuit de détection (13, 13a) est capable d'émettre un signal de détection d'un effet capacitif produit par la détection d'un toucher de la surface supérieure (111, 111a) de la lentille (11, 11a) transmis à un processeur pour détecter la position touchée par l'intermédiaire du tracé métallique (132,132a), et
le panneau tactile capacitif (1, 1a), peut être agencé sur la surface supérieure d'un panneau d'affichage (2, 2a), le panneau tactile capacitif comprenant de plus une couche lisse (15, 15a) enserrée entre la lentille (11, 11a) et la couche de circuit de détection (13, 13a) pour remplir l'espace entre la lentille (11, 11a) et la couche de circuit de détection (13, 13a), une plage de toucher de la zone de détection (14, 14a) comprenant une surface de la lentille (11, 11a) qui est en contact avec la couche lisse (15, 15a), et/ou la couche de circuit de détection (13, 13a) étant agencée sur une surface inférieure de la couche de masque (12, 12a) et une surface inférieure de la couche lisse (15, 15a).

2. Panneau tactile capacitif selon la revendication 1, dans lequel la couche lisse (15, 15a) est constituée d'un matériau organique ou inorganique transparent.

3. Panneau tactile capacitif selon la revendication 1, dans lequel la lentille (11, 11a) est constituée de verre, de caoutchouc ou d'ébonite.

4. Panneau tactile capacitif selon la revendication 1, dans lequel la couche de masque (12, 12a) est constituée d'un matériau de revêtement opaque.

5. Panneau tactile capacitif selon la revendication 1, comprenant de plus une couche de blindage (16, 16a) agencée entre la lentille (11, 11a) et la couche de masque (12, 12a) pour empêcher des signaux de bruit.

6. Panneau tactile capacitif selon la revendication 1, dans lequel le tracé métallique (133, 132a) est formé sur une périphérie de la surface supérieure ou de la surface inférieure du film conducteur (131, 134a).

7. Panneau tactile capacitif selon la revendication 1, comprenant de plus :
un recouvrement (17, 17a) agencé sur une surface inférieure de la couche de circuit de détection (13, 19a), et
une couche d'adhésif (4, 4a) agencée en dessous du recouvrement (17, 17a) pour fixation avec le panneau d'affichage (2, 2a).

8. Panneau tactile capacitif selon la revendication 1, comprenant de plus une couche d'adhésif (4, 4a) agencée sur une surface inférieure de la couche de circuit de détection (13, 19a) pour liaison avec une plaque de polarisation du panneau d'affichage (2, 2a).

9. Panneau tactile capacitif selon la revendication 1, dans lequel
la couche de circuit de détection comprend une première couche de circuit de détection (13a) capable d'émettre un premier signal de détection d'un effet capacitif produit par une détection de toucher de la surface supérieure (111a) de la lentille (11a) ;
une seconde couche de circuit de détection (19a) capable d'émettre un second signal de détection de l'effet capacitif produit par la détection d'un toucher ; et
une couche d'isolation (18a) recouvrant au moins une surface inférieure du premier circuit de détection (13a), la couche lisse (15a) étant enserrée entre la lentille (11a) et la première couche de circuit de détection (13a) pour remplir l'espace entre la lentille (11a) et la première couche de circuit de détection (13a), une plage de contact de la zone de détection (14a) comprenant une surface de la lentille (11a) qui est en contact avec la couche lisse (15a), et la première couche de circuit de détection (13a) étant agencée sur une surface inférieure de la couche de masque (12a) et une surface inférieure de la couche lisse (15a).

10. Panneau tactile capacitif selon la revendication 9, dans lequel la couche d'isolation (18a) est constituée d'un matériau isolant transparent.

11. Panneau tactile capacitif selon la revendication 9, dans lequel la première couche de circuit de détection (13a) est formée en dessous de la lentille (11a), la couche de masque (12a) recouvrant une périphérie de la première couche de circuit de détection (13a) pour exposer la zone de détection (14a), la seconde couche de circuit de détection (19a) étant formée sur une surface inférieure de la couche d'isolation (18a), le second signal de détection étant produit par la détection d'un toucher de la zone de détection (14a) et/ou la seconde couche de circuit de détection (19 a) étant agencée sur une surface inférieure de la couche d'isolation (18a).

12. Panneau tactile capacitif selon les revendications 9 ou 11, comprenant de plus une couche de blindage (16a) entre la lentille (11a) et la couche de masque (12a) pour empêcher des signaux de bruit ou dans lequel la première couche de circuit de détection (13a) comprend un premier film conducteur (134a), et la seconde couche de circuit de détection (19) comprend un second film conducteur (134b).

13. Panneau tactile capacitif selon les revendications 9 ou 11, dans lequel le film conducteur transparent comprend un premier film conducteur (134a) et un second film conducteur (134b), et le tracé métallique comprend un premier tracé métallique (132a, 133a) et un second tracé métallique (132b, 133b), la première couche de circuit de détection (13a) comprend le premier film conducteur (134b) et le premier tracé métallique (132a, 133a), formé sur une périphérie d'une surface supérieure ou d'une surface inférieure du premier film conducteur (134a), et/ou la seconde couche de circuit de détection (19a) comprend le second film conducteur (134b) et le second tracé métallique (132b, 133b) formé sur une périphérie d'une surface supérieure ou d'une surface inférieure du second film conducteur (134b), dans lequel la couche de masque (12a) recouvre la périphérie de la première couche de circuit de détection (13a), recouvre le tracé métallique (132a) et/ou est agencée sur le tracé métallique (132a).

14. Panneau tactile capacitif selon les revendications 9 ou 11, comprenant de plus un recouvrement (17a) agencé sur une surface inférieure de la seconde couche de circuit de détection (19a), et une couche d'adhésif (4a) agencée en dessous du recouvrement (17a) pour liaison avec un panneau d'affichage (2a) ou une couche d'adhésif (2a) agencée sur une surface inférieure de la seconde couche de circuit de détection (19a) pour fixation avec une plaque de polarisation du panneau d'affichage (2a).

15. Ensemble comprenant un panneau tactile capacitif (1, 1a) selon l'une quelconque des revendications précédentes et un panneau d'affichage (2, 2a), dans lequel le panneau tactile capacitif (1, 1a), est assemblé sur une surface supérieure du panneau d'affichage (2, 2a).
